# EUROPEAN PATENT APPLICATION

(11) **EP 2 749 532 A1**
(43) Date of publication of application: **02.07.2014**
(21) Application number: 11873491.2
(22) Date of filing: 29.09.2011
(51) Int. Cl.: C01B 33/02

(54) **RAW MATERIAL SILICON CRUSHING DEVICE**

(71) Applicant: Choshu Industry Co., Ltd., Sanyo-onoda-shi Yamaguchi 7578511 (JP)
(72) Inventor: MURAI, Tsuyoshi, Tokyo 185-0012 (JP); KONAKA, Toshinori, Tokyo 185-0012 (JP)
(74) Representative: Horn Kleimann Waitzhofer
(86) International application number: PCT/JP2011/005509
(87) International publication number: WO 2013/046270

(57) **Abstract**

A raw silicon crusher is provided which can mechanically crush raw silicon without reducing the purity thereof, and can suppress loss by pulverization. A first bed 12 includes a first case 22, a first crushing silicon member 20 having a portion protruding outward from an opening of the first case 22, and a first anti-contamination member 24 disposed between the first crushing silicon member 20 and the first case 22. A second bed 14 includes a second case 42, a second crushing silicon member 41 having a portion protruding outward from an opening of the second case 42, a pair of side silicon members 44 covering both sides of a space A between a pair of crushing surfaces 16 and 18, a second anti-contamination member 48 disposed between the second crushing silicon member 41 and the second case 42, and third anti-contamination members 49 disposed between the side silicon members 44 and side silicon cases 45. Thus, a raw silicon crusher 10 that resolves the above problem is provided.

## Description

### TECHNICAL FIELD

The present invention relates to a raw silicon crusher that crushes raw silicon as a raw material of silicon wafers used as a semiconductor material.

### BACKGROUND ART

Silicon wafers used as a semiconductor material are produced by cutting a single-crystalline silicon rod having a substantially cylindrical shape along its diameter into slices having a predetermined thickness. Such a single-crystalline silicon rod is produced by dipping a single-crystalline silicon piece as a seed crystal in molten raw silicon and then slowly pulling up, while rotating, the seed crystal to cause the single-crystalline silicon to grow (so-called Czochralski method). As the raw silicon, a residual part of another single-crystalline silicon rod from which a predetermined number of silicon wafers have been cut, or polycrystalline silicon produced by the Siemens method or the monosilane method is used.

The raw silicon is melted by filling the raw silicon in a quartz crucible, and heating the crucible. In order to melt the raw silicon efficiently, the raw silicon needs to be crushed into pieces having sizes small enough to fill the crucible.

Conventionally, the raw silicon has been crushed manually using a tungsten hammer or the like. However, since manual crushing of very hard raw silicon is a hard work, some techniques have been proposed to reduce as much as possible the labor required for the manual crushing, such as mechanical crushing with a jaw crusher having tungsten carbide teeth, and silicon heating and quenching equipment that causes cracks in raw silicon by heating the raw silicon at a high temperature and then quenching the raw silicon, as disclosed in Patent Document 1.

### CITATION LIST

### [PATENT LITERATURE]

[PTL 1] International Publication WO 09/019749

### SUMMARY OF THE INVENTION

### PROBLEMS TO BE SOLVED BY THE INVENTION

However, regardless of which of the above-mentioned raw silicon crushing means is selected, tungsten (the hammer), tungsten carbide (the teeth of the jaw crusher), or the like attaches to the surface of the raw silicon during crushing, and thereby the purity of the raw silicon is degraded. In addition, when the hammer or the jaw crusher is used, the generation rate of powder of the raw silicon (1 mm or less in particle size) is as high as 10 to 20% (on a mass basis), that is, so-called "loss by pulverization" is great.

Meanwhile, there is a method of striking a block of raw silicon having an appropriate size, used as a substitute for a hammer, against raw silicon to be crushed (simultaneous crushing method). This method can minimize reduction in the purity of the raw silicon during crushing. However, since this method requires labor as much as or more than that of the hammer crushing, a worker might get tenosynovitis. Further, the worker might accidentally hurt his/her hand grasping the raw silicon as a substitute for a hammer during the simultaneous crushing work.

Further, it is considered to avoid reduction in the purity of raw silicon by forming the teeth of the jaw crusher out of high-purity raw silicon. In this case, however, the teeth need to be fixed by a fixing member made of a metal other than silicon, and the fixing member causes metal contamination. Therefore, it is not possible to completely avoid reduction in the purity of the raw silicon. In addition, a portion contaminated by the metal needs to be removed by chemical etching.

The present invention has been made in view of the problems in the conventional techniques. Therefore, it is a major object of the present invention to provide a raw silicon crusher that can mechanically crush raw silicon without reduction in the purity of the raw silicon while minimizing the loss by pulverization.

### SOLUTION TO THE PROBLEMS

The invention disclosed in claim 1 is a raw silicon crusher 10 which includes a pair of first and second beds 12 and 14 having vertical crushing surfaces 16 and 18 opposed to each other, and presses and crushes, with the pair of crushing surfaces 16 and 18, high-purity raw silicon G that has been subjected to a heating and quenching process and is put between the crushing surfaces 16 and 18 by causing the crushing surfaces 16 and 18 to come close to and go away from each other. The first bed 12 includes: a bottomed-box-shaped first case 22 having an opening on the crushing surface 16 side; a first crushing silicon member 20 disposed in the first case 22 such that a portion thereof protrudes outward from the opening of the first case 22, a surface of the protruding portion serving as the crushing surface 16, and the first crushing silicon member 20 having a purity equal to or higher than the purity of the raw silicon G; and a first anti-contamination member 24 disposed between the first crushing silicon member 20 and the first case 22. The second bed 14 includes: a bottomed-box-shaped second case 42 having an opening on the crushing surface 18 side; a second crushing silicon member 41 disposed in the second case 42 such that a portion thereof protrudes outward from the opening of the second case 42, a surface of the protruding portion serving as the crushing surface 18, and the second crushing silicon member 41 having a purity equal to or higher than the purity of the raw silicon G; side silicon cases 45 mounted to both side plates 42a of the second case 42; a pair of side silicon members 44 that are fitted in the side silicon cases 45 and cover both sides of a space A between the pair of crushing surfaces 16 and 18, the side silicon members 44 having a purity equal to or higher than the purity of the raw silicon G; a second anti-contamination member 48 disposed between the second crushing silicon member 41 and the second case 42; and third anti-contamination members 49 disposed between the side silicon members 44 and the side silicon cases 45.

In the raw silicon crusher 10 according to the present invention, the raw silicon G is pressed and crushed between the high-purity first and second crushing silicon members 20 and 41. At this time, the first to third anti-contamination members 24, 48, and 49 are disposed between the first and second crushing silicon members 20 and 41 and the side silicon member 44, and the first, second, and side silicon cases 22, 42, and 45 which are foreign matter different from the raw silicon G and cause mixing of impurities, respectively, thereby preventing direct contacts between the silicon members and the cases. Thus, the components of the first, second, and side silicon cases 22, 42, and 45 are prevented from attaching to and contaminating the first and second crushing silicon members 20 and 41 and the side silicon members 44. Therefore, the purity of the raw silicon G can be maintained even after the crushing process. In addition, even if part of the first and second crushing silicon members 20 and 41 and the side silicon members 44 is broken during the crushing process and mixed into the raw silicon G, since the broken piece has no impurity attached thereto, the purity of the crushed raw silicon G is not degraded.

Further, in the raw silicon crusher 10, the raw silicon G is crushed, not by an impact force but by a pressing force, along large cracks that have been caused in the raw silicon G. Therefore, the crushed material is divided into large blocks, thereby significantly reducing the amount of pulverized material. Thus, the loss by pulverization can be minimized to about 2 to 3% (on a weight basis), for example.

In addition, when the raw silicon G is pressed and crushed, the raw silicon G is surrounded by the pair of side silicon members 44 that cover the both sides of the space A between the pair of crushing surfaces 16 and 18. Therefore, the crushed raw silicon G is prevented from undesirably dropping from the both sides of the space A.

The invention disclosed in claim 2 relates to improvement of the raw silicon crusher 10 disclosed in claim 1, and is characterized by that a vibrator 40 for vibrating the beds 12 and 14 is mounted to at least one of the first case 22 and the second case 42.

When the raw silicon G is pressed and crushed by the crushing surfaces 16 and 18 of the first crushing silicon member 20 and the second crushing silicon member 41, fragments of the crushed raw silicon G are pressed and attached to the crushing surfaces 16 and 18. An increase in the amount of the attached fragments might interfere with discharge of the crushed raw silicon G. However, since the raw silicon crusher 10 of the present invention is provided with the vibrator 40, the fragments of the raw silicon G attached to the crushing surfaces 16 and 18 can be shaken off by vibrating the first bed 12 and/or the second bed 14 with the operation of the vibrator 40.

### ADVANTAGEOUS EFFECTS OF THE INVENTION

According to the present invention, materials that come in direct contact with raw silicon having been subjected to a heating and quenching process can be limited to the raw silicon and the above-mentioned high-purity silicon members. Therefore, in the raw silicon crushing process, the risk of reduction in the purity of the raw silicon can be minimized, and the labor required for crushing the raw silicon can be significantly reduced as compared to manual crushing, while reducing the loss by pulverization.

### BRIEF DESCRIPTION OF THE DRAWINGS

[FIG. 1] FIG. 1 is a sectional plan view showing a raw silicon crusher to which the present invention is applied.
[FIG. 2] In FIG. 2, (a) is a front view of a first bed, and (b) is a left side view thereof.
[FIG. 3] In FIG. 3, (a) is a front view of a second bed, and (b) is a cross-sectional view thereof taken along a line X-X.
[FIG. 4] FIG. 4 is a cross-sectional view of the raw silicon crusher showing the positional relationship between the first bed and the second bed during crushing of raw silicon.
[FIG. 5] FIG. 5 is a cross-sectional view of the raw silicon crusher showing the positional relationship between the first bed and the second bed when raw silicon is put in the crusher.

### DESCRIPTION OF EMBODIMENTS

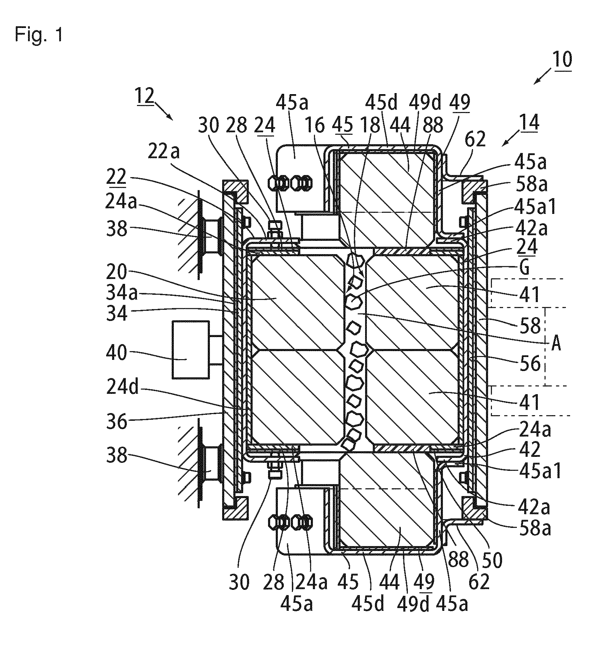

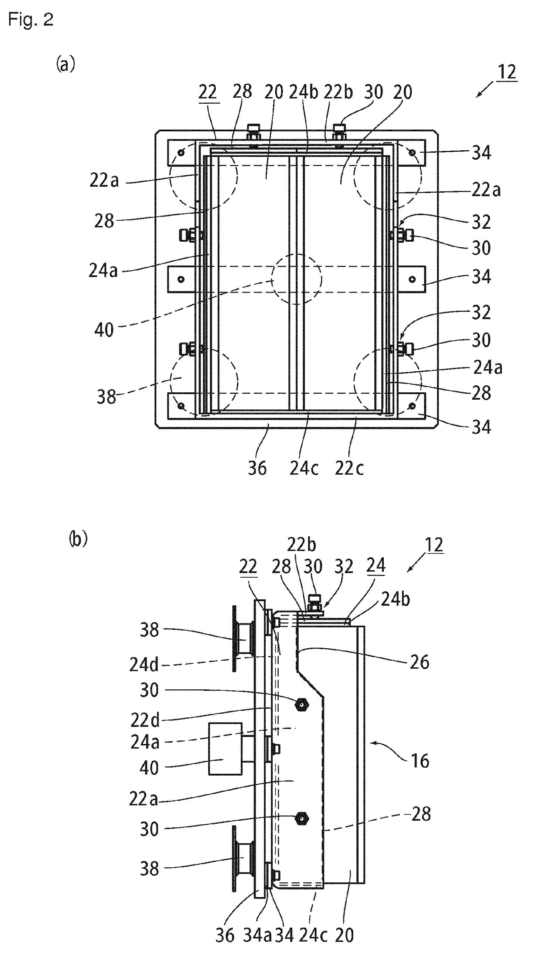

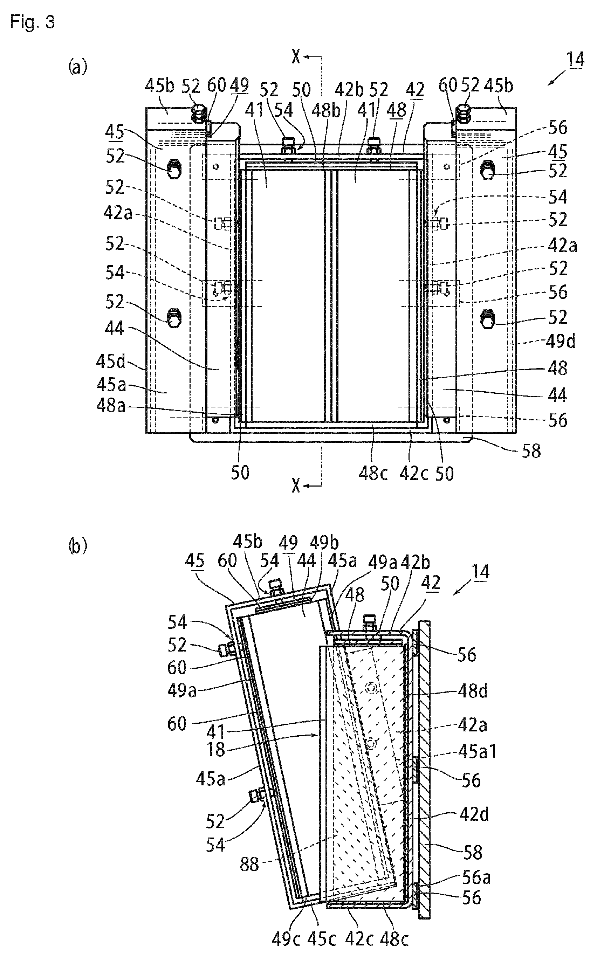

Hereinafter, a raw silicon crusher 10 to which the present invention is applied will be described with reference to the drawings. The raw silicon crusher 10 is suitable for crushing of high-purity raw silicon G having a shape of a rod or a large block, which has been subjected to a heating and quenching process and contains innumerable fine cracks inside (or a residual part of a rod or block of high-purity raw silicon which has been produced by the CZ method, the FZ method, or the casting method, and from which silicon wafers have been cut out). As shown in FIG. 1, the raw silicon crusher 10 includes a lateral pair of a first bed 12 and a second bed 14, and presses and crushes raw silicon G with opposing crushing surfaces 16 and 18 of the beds 12 and 14. As shown in FIGS. 2 and 3, the first bed 12 substantially includes first crushing silicon members 20, a first case 22, pressing members 28, and a first anti-contamination member 24. As shown in FIGS. 3(a) and 3(b), the second bed 14 substantially includes second crushing silicon members 41, side silicon members 44, a second case 42, side silicon cases 45, pressing members 50 and 60, and second and third anti-contamination members 48 and 49.

Each first crushing silicon member 20 is a high-purity silicon rod obtained as follows. That is, solid and cylindrical polycrystalline silicon that is produced by the Siemens method and is not subjected to a heating and quenching process is cut at a predetermined length and then shaped into a quadrangular prism, followed by chamfering of four edges, an etching process, and removal of metal contamination. The first crushing silicon member 20 has a purity equal to (e.g., eleven nines) or higher than the purity of the raw silicon G. The polycrystalline silicon may be formed by a method other than the Siemens method, but the Siemens method is preferable in terms of the hardness of the first crushing silicon member 20. The same applies to the second crushing silicon members 41 and the side silicon members 44.

In this embodiment, two pieces of first crushing silicon members 20 are arranged in the vertical direction (may be arranged in the horizontal direction although not shown) inside the first case 22, and a part thereof protrudes outward from an opening of the first case 22. A surface of the protruding part serves as the crushing surface 16 that presses and crushes the raw silicon G with the crushing surface 18 of the second bed 14. Likewise, a surface of a protruding part of the second crushing silicon members 41 from an opening of the second case 42 serves as the crushing surface 18 that presses and crushes the raw silicon G with the crushing surface 16 of the first bed 12. Protruding surfaces of the side silicon members 44 from openings of the side silicon cases 45 cover both sides of a space A between the crushing surface 16 of the first bed 12 and the crushing surface 18 of the second bed 14 during crushing of the raw silicon G. Of course, the number of the first crushing silicon members 20 is not limited to two, and may be one or three or more depending on the rated capacity of the raw silicon crusher 10. In addition, the length of the first crushing silicon members 20 is not particularly limited. The same applies to the second crushing silicon members 41 and the side silicon members 44.

The first case 22 has a bottomed-box shape having an opening on the crushing surface 16 side. In the present embodiment, the first case 22 is obtained by bending a stainless steel plate and welding junctions. The first case 22 includes a back plate 22d, side plates 22a bent at a right angle from lateral ends of the back plate 22d, a top plate 22b bent at a right angle from an upper end of the back plate 22d, and a bottom plate 22c bent at a right angle from a lower end of the back plate 22d.

The first case 22 of the present embodiment has notches 26 formed at upper portions of the side plates 22a. The notches 26 facilitate attachment and detachment of the first crushing silicon members 20, and prevent the first case 22 from interfering with the side silicon members 44 in the second case 42 described later. Accordingly, the top plate 22b protrudes forward by the width of the notches 26 of the side plates 22a. Two bolt holes 32 are formed in a portion of each of the side plates 22a of the first case 22 where the notch 26 is absent, and in the protruding portion of the top plate 22b, respectively, and push bolts 30 for urging the pressing member 28 are screwed into the bolt holes 32.

Further, the back surface of the first case 22 is mounted by bolts to one surface of a base plate 36 via three spacers 34 that are provided at upper, middle, and lower positions on the back surface so as to protrude from the left and right ends of the back surface. A cushioning member 34a such as a rubber plate is sandwiched between each spacer 34 and the base plate 36 although it is not essential. On the other surface of the base plate 36, vibration isolators 38 are mounted on the four corners thereof, and a vibrator 40 is mounted on the center portion thereof. Of course, the vibrator 40 may be mounted on the second bed 14 described later, or may be provided on both the beds 12 and 14.

The first anti-contamination member 24 includes: a top-side first anti-contamination member 24b that is in direct contact with and covers the top surface of one or a plurality of high-purity first crushing silicon members 20 housed in the first case 22; lateral-side first anti-contamination members 24a that are in direct contact with and cover the side surfaces thereof; a first anti-contamination member 24c that is in direct contact with and covers the bottom surface thereof; and a first anti-contamination member 24d that is in direct contact with and covers the entire back surface thereof. As a material of the first anti-contamination member 24, a tetrafluoroethylene plate, a silicon plate having a purity equal to (e.g., eleven nines) or higher than that of the raw silicon G, or the like may be used.

More specifically, each lateral-side first anti-contamination member 24a is disposed between the pressing member 28 on the side plate 22a of the first case 22 and the side surface of the one or the plurality of first crushing silicon members 20 being housed, and the top-side first anti-contamination member 24b is disposed between the pressing member 28 on the top plate 22b of the first case 22 and the top surface of the one or the plurality of first crushing silicon members 20 being housed. The back-side first anti-contamination member 24d is disposed directly, i.e., without an intervening pressing member, between the back plate 22d of the first case 22 and the back surface of the first crushing silicon member 20 so as to cover the entire back surface, and the bottom-side first anti-contamination member 24c is disposed directly, i.e., without an intervening pressing member, between the bottom plate 22c of the first case 22 and the bottom surface of the first crushing silicon member 20 so as to cover the entire bottom surface.

The lateral-side first anti-contamination member 24a and the bottom-side first anti-contamination member 24c are shaped in accordance with the shapes of the side surface and the bottom surface of the first case 22, respectively, such that the first anti-contamination members 24a and 24c are not exposed outward from the side surface and the bottom surface of the first case 22, respectively.

On the other hand, the top-side first anti-contamination member 24b greatly protrudes beyond the top plate 22b of the first case 22 to the vicinity of the crushing surface 16 of the first crushing silicon member 20, and thereby covers and protects the upper surface of the one or the plurality of first crushing silicon members 20 over the entire width thereof. Further, the back-side first anti-contamination member 24d is formed in a size that covers the entire back surface of the one or the plurality of first crushing silicon members 20.

The pressing members 28 are each made of a stainless steel plate, and are disposed outside the lateral-side and top-side first anti-contamination members 24a and 24b so as to have the same shapes as these members. The pressing members 28 are pressed by the double-nut-fitted push bolts 30 at the both side surfaces and the top surface of the first case 22, and the first crushing silicon member 20 fitted in the first case 22 is pressed and fixed to the first case 22 by the lateral-side and top-side first anti-contamination members 24a and 24b disposed in contact with the pressing members 28 and by the directly-sandwiched bottom-side first anti-contamination member 24c.

As shown in FIGS. 3(a) and 3(b), the second bed 14 substantially includes second crushing silicon members 41, a second case 42, side silicon members 44, side silicon cases 45, a second anti-contamination member 48, a third anti-contamination member 49, and pressing members 50 and 60 for the second case 42 and the side silicon cases 45.

The second case 42 has a bottomed-box shape having an opening on the crushing surface 18 side, like the first case 22. The second case 42 is obtained by bending a stainless steel plate and welding junctions. The second case 42 includes a back plate 42d, side plates 42a, a top plate 42b, and a bottom plate 42c. In addition, the side silicon cases 45 are mounted to the second case 42 of the present embodiment so as to be tilted with respect to the side plates 42a of the second case 42. Therefore, the side silicon member 44 is fitted in each side silicon case 45 so as to be tilted with respect to the side plate 42a. Accordingly, in order to prevent the side plate 42a from becoming an obstacle when the side silicon member 44 is inserted to be fitted in the side silicon case 45 being tilted, the side plate 42a is obliquely cut off in accordance with the tilting of the side silicon member 44 such that the width of the side plate 42a is narrowed at its lower end to an extent that allows insertion of the side silicon member 44 in the side silicon case 45 and is increased toward its upper end (in FIG. 3(b), the cut-off portion is shown by left-downward dashed lines, and the partially-cut side plate 42a is shown by right-upward dashed lines). In the present embodiment, in a lower end portion of the side plate 42a, the cut-off portion has, at its bottom end, a downward slope to an end of the bottom plate 42c in accordance with the tilting of the bottom surface of the side silicon member 44. That is, a right-triangle portion of the side plate 42a is cut off in accordance with the tilting of the side silicon case 45.

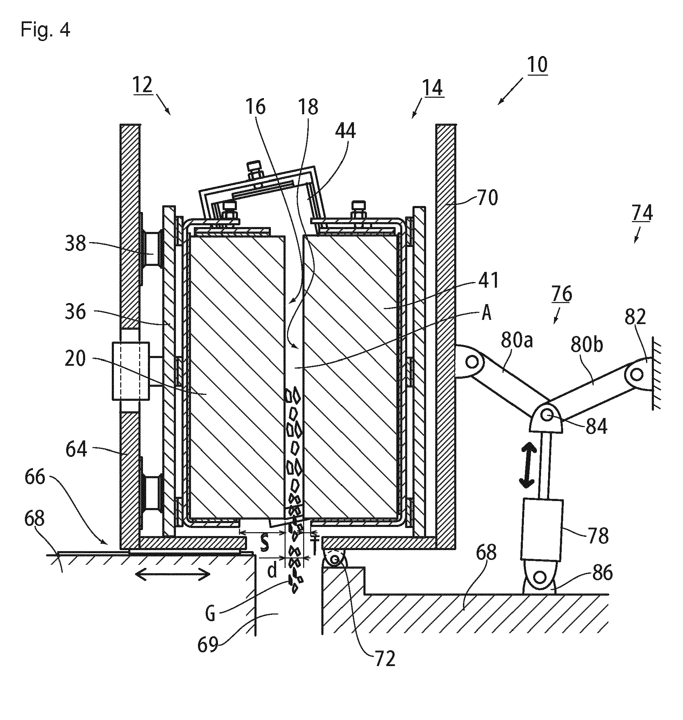

The back plate 42d of the second case 42 is, like the first case 22, formed according to one or a plurality of second crushing silicon members 41 to be housed therein so that these members 41 can be housed therein, and front ends of the top plate 42b and the back plate 42d are extended to positions a little back toward the back plate side from the crushing surface 18 of the second crushing silicon member 41 housed therein. A distance T between the front end and the crushing surface 18 is, as shown in FIG. 4, narrower than a distance S between the front end and the crushing surface 16 in the first case 22 (in other words, the protruding margin of the second crushing silicon member 41 is small).

Further, the back plate 42d of the second case 42 is, like the first case 22, mounted to a base plate 58 via spacers 56 provided at upper, middle, and lower positions on the back plate 42d. A cushioning member 56a such as a rubber plate may be sandwiched between each spacer 56 and the base plate 58 according to need.

The second anti-contamination member 48 includes: a top-side second anti-contamination member 48b that is in direct contact with and covers the top surface of the one or the plurality of second crushing silicon members 41 housed in the second case 42; lateral-side second anti-contamination members 48a that are in direct contact with and cover the side surfaces thereof; a second anti-contamination member 48c that is in direct contact with and covers the bottom surface thereof; and a second anti-contamination member 48d that is in direct contact with and covers the back surface thereof.

That is, each lateral-side second anti-contamination member 48a is disposed between the pressing member 50 on the side plate 42a of the second case 42 and the side surface of the one or the plurality of second crushing silicon members 41 being housed, and the top-side second anti-contamination member 48b is disposed between the pressing member 50 on the top plate 42b of the second case 42 and the top surface of the one or the plurality of second crushing silicon members 41 being housed. Further, the back-side second anti-contamination member 48d is disposed directly, i.e., without an intervening pressing member, between the back plate 42d of the second case 42 and the back surface of the second crushing silicon member 41 so as to cover the entire back surface, and the bottom-side second anti-contamination member 48c is disposed directly, i.e., without an intervening pressing member, between the bottom plate 42c of the second case 42 and the bottom surface of the second crushing silicon member 41 so as to cover the entire bottom surface.

The lateral-side, top-side, and bottom-side second anti-contamination members 48a to 48c are shaped in accordance with the shapes of the side surface, the top surface, and the bottom surface of the second case 42 so that these members are not exposed outward from the side surface, the top surface, and the bottom surface of the second case 42, respectively.
Further, the back-side second anti-contamination member 48d is formed in a size that covers the entire back surface of the one or the plurality of second crushing silicon members 42 being housed.

The pressing members 50 of the second case 42 are each made of a stainless steel plate as described above, and are provided outside the lateral-side and top-side second anti-contamination members 48a and 48b so as to have the same shapes as these members. The pressing members 50 are pressed by the double-nut-fitted push bolts 30 at the both side surfaces and the top surface of the second case 42, and the second crushing silicon member 41 fitted in the second case 42 is pressed and fixed to the second case 42 by the lateral-side and top-side second anti-contamination members 48a and 48b provided in contact with the pressing members 50 and by the directly-sandwiched bottom-side second anti-contamination member 48c.

The pair of side silicon cases 45 are similar bottomed-box-shaped cases formed by a bending and welding process of a stainless steel plate. Each side silicon case 45 includes a back plate 45d, side plates 45a, a top plate 45b, and a bottom plate 45c. A bent joint part 45a1 of the side plate 45a on the second case 42 side is fixed by welding or bolts to the side plate 42a of the second case 42, along the overall length thereof, such that an opening of the side silicon case 45 faces the second crushing silicon member 41. In order to hold the side silicon cases 45 more firmly, reinforcing members 62 having an L-shaped cross section are provided to be fixed between reinforcing bars 58a provided at both lateral ends of the base plate 58 and the side silicon cases 45, along the overall length thereof, respectively (refer to FIG. 1). As described above, the side silicon cases 45 are mounted to the second case 42 so as to be tilted with respect to the second case 42. As shown in FIG. 3(b), the protruding width of the exposed portion of the side silicon member 44 from the crushing surface 18 is increased toward the top in FIG. 3(b). In addition, bolt holes 54 for push bolts 52 are formed at vertically two positions on the side plate 45a, on the first case side, of the side silicon case 45 and at one position, on the top plate 45b, of the side silicon case 45, and double-nut-fitted push bolts 52 are screwed into the bolt holes 54.

The third anti-contamination member 49 includes: a top-side third anti-contamination member 49b that is in direct contact with and covers the top surface of the one or the plurality of high-purity side silicon members 44 housed in the side silicon case 45; lateral-side third anti-contamination members 49a that are in direct contact with and cover the side surfaces thereof; a third anti-contamination member 49c that is in direct contact with and covers the bottom surface thereof; and a third anti-contamination member 49d that is in direct contact with and covers the back surface thereof. More specifically, the lateral-side third anti-contamination member 49a on the first case 22 side is disposed between the pressing member 60 on the side plate 45a of the side silicon case 45 on the first case 22 side and the side surface of the housed side silicon member 44 on the first case 22 side, and the top-side third anti-contamination member 49b is disposed between the pressing member 60 on the top plate 45b of the side silicon case 45 and the top surface of the housed side silicon member 44. Further, the third anti-contamination member 49d is disposed directly, i.e., without an intervening pressing member, between the back plate 45d of the side silicon case 45 and the back surface of the side silicon member 44 so as to cover the entire back surface, the third anti-contamination member 49c is disposed directly, i.e., without an intervening pressing member, between the bottom plate 45c of the side silicon case 45 and the bottom surface of the side silicon member 44 so as to cover the entire bottom surface, and the third anti-contamination member 49a is disposed directly, i.e., without an intervening pressing member, between the side plate 45a of the side silicon case 45 on the second case 42 side and the side surface of the side silicon member 44 on the second case 42 side so as to cover the entire side surface on the second case 42 side.

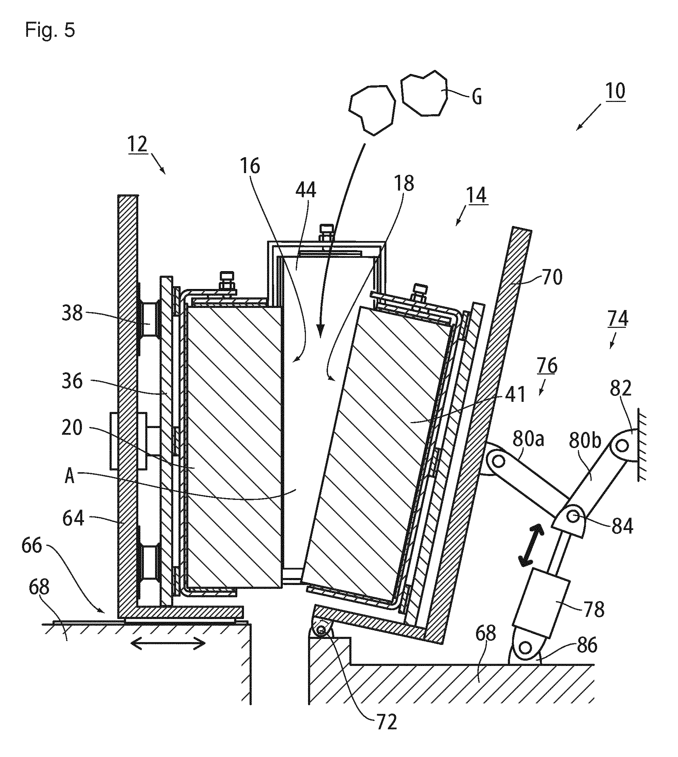

Further, as shown in FIG. 1, the side silicon member 44 is provided so as to oppose the side surface of the second crushing silicon member 41 with a small gap so that the side silicon member 44 does not come in contact with the side surface of the first crushing silicon member 20 when the crushing surfaces 16 and 18 are closed by operating the second bed 14. Therefore, there is a gap between the second crushing silicon member 41 and the side silicon member 44. Since the side silicon member 44 is provided to be tilted with respect to the second crushing silicon member 41, this gap has a right-triangle shape whose width gradually increases toward the bottom, due to the above-mentioned relationship between the side silicon member 44 and the side plate 42a of the second case 42. The gap between the second crushing silicon member 41 and the side silicon member 44 is filled with a filling member 88 made of an tetrafluoroethylene plate or a silicon plate having a purity at least equal to that of the silicon members 41 and 44, with a protruding margin of the second crushing silicon member 41 being left (refer to FIG. 1), thereby preventing the crushed raw silicon G from entering the gap. The side silicon member 44 is taller than the first and second crushing silicon members 20 and 41, and protrudes upward over the first and second crushing silicon members 20 and 41 (refer to FIGS. 4 and 5).

As shown in FIGS. 4 and 5, the raw silicon crusher 10 is mounted on a stage 68 via first and second bases 63 and 70. An opening 69 through which the crushed raw silicon G falls is provided directly beneath the crushing surfaces 16 and 18 of the raw silicon crusher 10. Beneath the opening 69, a carrier (not shown) for carrying out the crushed raw silicon G is provided.

The first bed 12 of the raw silicon crusher 10 is fixed to the first base 64 via vibration isolators 38 so that the crushing surface 16 is substantially vertical. The first base 64 is mounted, at its lower end surface, on an upper surface of the stage 68 via a slide mechanism 66. The slide mechanism 66 allows a choice between a state where the first bed 12 is slidable with respect to the stage 68 and a state where the first bed 12 is fixed to the stage 68.

The second bed 14 is fixed to the second base 70 so as to oppose to the crushing surface 16 of the first bed 12. The second base 70 is mounted on the upper surface of the stage 68 via the opening 69. Specifically, a lower end portion, on the first bed 12 side, of the second base 70 is pivotally connected to the stage 68 by a hinge 72, and a pivoting mechanism 74 that causes the second bed 14 to pivot around the hinge 72 is provided on the back surface (right-side surface in the figure) of the second base 70. The pivoting mechanism 74 allows the second bed 14 to reciprocally move in a range from a state where the crushing surface 18 of the second bed 14 is substantially vertical and is substantially parallel to the crushing surface 16 of the first bed 12 (FIG. 4) to a state where the second bed 14 is opened such that the distance between the crushing surfaces 16 and 18 gradually increases toward the top (FIG. 5).

The pivoting mechanism 74 includes a link mechanism 76 and an actuator 78 that expands and contracts hydraulically (or pneumatically). The link mechanism 76 includes two link members 80a and 80b. One end of the link member 80a is pivotally connected to the side surface of the second base 70 on which the second bed 14 is provided, and one end of the link member 80b is pivotally connected to a bracket 82 fixed to a steel column of a building, for example. The other end of the link member 80a, the other end of the link member 80b, and an end of the actuator 78 are pivotally connected to each other with a pin 84. The other end of the actuator 78 is pivotally connected to a bracket 86 fixed to the upper surface of the stage 68. Accordingly, by expanding and contracting the actuator 78, the second bed 14 is moved reciprocally with respect to the stage 68, around the hinge 72, by the link members 80a and 80b. At this time, when the second bed 14 is tilted backward and the opening angle thereof with respect to the first bed 12 becomes maximum, a ridge line, in the vertical direction, of the side surface of the side silicon member 44 on the first bed 12 side does not go beyond at least the crushing surface 16 of the first crushing silicon member 20 and is maintained to be overlapped with the crushing surface 16.

The procedure to crush raw silicon G by using the raw silicon crusher 10 of the present embodiment will be described. First, a distance between the crushing surface 16 and the crushing surface 18 of the second bed 14 is adjusted by using the slide mechanism 66 provided on the lower surface of the first bed 12 (first base 64). As described above, when the pivoting mechanism 74 is operated, the second bed 14 is pivotally moved around the hinge 72 provided at the lower end portion thereof on the first bed 12 side, and therefore, variation in the distance between the crushing surfaces 16 and 18 becomes greater toward the top, whereas the distance d at the lower end does not substantially change. Therefore, this distance d is equal to the maximum particle diameter of the crushed raw silicon G to be discharged from the raw silicon crusher 10 to the outside.

After the distance d is appropriately set, the first bed 12 is fixed onto the stage 68 with the slide mechanism 66 being set in the fixed state. Thereafter, the second bed 14 is moved in the tilt-down direction by operating the actuator 78 to maximize the distance between the crushing surfaces 16 and 18 at the upper ends. Thus, the raw silicon crusher 10 becomes ready to receive the raw silicon (FIG. 5). Thereafter, large blocks of raw silicon G having innumerable fine cracks inside are put in the crusher 10 from the upper ends of the crushing surfaces 16 and 18. The large blocks of raw silicon G are caught at somewhere in the V-shaped space between the crushing surfaces 16 and 18.

After the blocks of raw silicon G are put in the crusher 10, the second bed 14 is pivotally moved to be closed by operating the actuator 78, whereby the crushing surface 18 of the second bed 14 is brought close to the opposing crushing surface 16 of the first bed 12, and the large blocks of raw silicon G put between the crushing surfaces 16 and 18 are pressed. The pressed large blocks of raw silicon G are crushed into smaller blocks along fragile cracks among the fine cracks contained therein. Then, the second bed 14 is again moved in the tilt-down direction, whereby the relatively small blocks of raw silicon G caused by the crushing fall down between the crushing surfaces 16 and 18 as the second bed 14 is opened. At this time, some blocks of raw silicon G smaller than the distance d between the crushing surfaces 16 and 18 directly fall down toward the opening 69, while some blocks of raw silicon G larger than the distance d are caught in the middle and are again crushed into smaller blocks by the second-time closing operation of the second bed 14. By repeating the above-mentioned crushing operation, the raw silicon G put between the crushing surfaces 16 and 18 is crushed into blocks smaller than the distance d. That is, the particle diameter of the raw silicon G is gradually reduced as the raw silicon G is pressed and crushed many times between the crushing surfaces 16 and 18, and the raw silicon G with the reduced particle diameter gradually moves downward. Finally, when the particle diameter of the raw silicon G becomes smaller than the distance d at the lower ends of the crushing surfaces 16 and 18, the crushed raw silicon G is discharged from the raw silicon crusher 10 to the outside. Since the distance d is adjustable as described above, the distance d is adjusted according to a desired particle diameter. Since the crushing of the raw silicon G is performed such that the raw silicon G is gradually crushed into smaller blocks along the fine cracks contained therein, the raw silicon G is not likely to be pulverized, and thus the loss by pulverization is reduced.

Further, since the side silicon members 44 are taller than the first and second crushing silicon members 20 and 41, even if, during crushing, the raw silicon G slides on the crushing surfaces 16 and 18 to move upward and escape in the lateral direction with the movement of the second bed 14 in the crushing direction, the raw silicon G is blocked by the side silicon members 44 from dropping in the lateral direction.

Further, when the raw silicon G is discharged, the first case 22 (and/or the second case 42) can be vibrated by the vibrator 40, whereby it is possible to shake off fragments of the raw silicon G attached to the crushing surface 16 (and/or the crushing surface 18) by vibrating the first case 22 (and/or the second case 42).

In the above embodiment, the side silicon members 44 are provided to be tilted with respect to the second crushing silicon member 41. However, the side silicon members 44 may be arranged to be parallel to the second crushing silicon member 41 so long as the side silicon members 44 each have a large area enough to cover the both sides of the space A between the crushing surfaces 16 and 18 during crushing of the raw silicon G.

Further, as described above, the edges of the first crushing silicon member 20, the second crushing silicon member 41, and the side silicon members 44, which come in contact with the raw silicon G, are preferably chamfered (e.g., 70 to 80 ϕ). If the edges are sharp, the edges might be chipped when pressing and crushing the raw silicon G. Chamfering the edges resolves such a problem.

### DESCRIPTION OF THE REFERENCE CHARACTERS

- 10:: raw silicon crusher
- 12:: first bed
- 14:: second bed
- 16:: crushing surface
- 18:: crushing surface
- 20:: first crushing silicon member
- 22:: first case
- 22a:: side plate
- 22b:: top plate
- 22c:: bottom plate
- 22d:: back plate
- 24, 24a, 24b, 24c, 24d:: first anti-contamination member
- 26:: notch
- 28:: pressing member
- 30:: push bolt
- 32:: bolt hole
- 34:: spacer
- 36:: base plate
- 38:: vibration isolator
- 40:: vibrator
- 41:: second crushing silicon member
- 42:: second case
- 42a:: side plate
- 42b:: top plate
- 42c:: bottom plate
- 42d:: back plate
- 44:: side silicon member
- 45:: side silicon case
- 45a:: side plate
- 45b:: top plate
- 45c:: bottom plate
- 45d:: back plate
- 48, 48a, 48b, 48c, 48d:: second anti-contamination member
- 49, 48a, 48b, 48c, 48d:: third anti-contamination member
- 50:: pressing member
- 52:: push volt
- 54:: volt hole
- 56:: spacer
- 58:: base plate
- 60:: pressing member
- 62:: reinforcing member
- 64:: first base
- 66:: slide mechanism
- 68:: stage
- 70:: second base
- 72:: shaft
- 74:: pivoting mechanism
- 76:: link mechanism
- 78:: actuator
- 80a, 80b:: link member
- 82:: bracket
- 84:: pin
- 86:: bracket
- 88:: filling member

## Claims

1. A raw silicon crusher that includes a pair of first and second beds having vertical crushing surfaces opposed to each other, and presses and crushes, with the pair of crushing surfaces, high-purity raw silicon that has been subjected to a heating and quenching process and is put between the crushing surfaces, by causing the crushing surfaces to come close to and go away from each other, wherein
the first bed comprising:
a bottomed-box-shaped first case having an opening on the crushing surface side;
a first crushing silicon member disposed in the first case such that a portion thereof protrudes outward from the opening of the first case, a surface of the protruding portion serving as the crushing surface, and the first crushing silicon member having a purity equal to or higher than the purity of the raw silicon; and
a first anti-contamination member disposed between the first crushing silicon member and the first case, and
the second bed comprising:
a bottomed-box-shaped second case having an opening on the crushing surface side;
a second crushing silicon member disposed in the second case such that a portion thereof protrudes outward from the opening of the second case, a surface of the protruding portion serving as the crushing surface, and the second crushing silicon member having a purity equal to or higher than the purity of the raw silicon;
side silicon cases mounted to both side plates of the second case;
a pair of side silicon members that are fitted in the side silicon cases and cover both sides of a space between the pair of crushing surfaces, the side silicon members having a purity equal to or higher than the purity of the raw silicon;
a second anti-contamination member disposed between the second crushing silicon member and the second case; and
third anti-contamination members disposed between the side silicon members and the side silicon cases.

2. The raw silicon crusher according to claim 1, wherein a vibrator for vibrating the beds is mounted to at least one of the first case and the second case.
